Europäisches Patentamt

European Patent Office

Office européen des brevets

(11) Veröffentlichungsnummer: **0 380 111**
**A2**

## (12) EUROPÄISCHE PATENTANMELDUNG

(21) Anmeldenummer: **90101523.0**

(22) Anmeldetag: **25.01.90**

(51) Int. Cl.⁵: **B65D 33/38**

(30) Priorität: **26.01.89 DE 8900883 U**

(43) Veröffentlichungstag der Anmeldung:
**01.08.90 Patentblatt 90/31**

(84) Benannte Vertragsstaaten:
**GR**

(71) Anmelder: **INDAG GESELLSCHAFT FÜR INDUSTRIEBEDARF MBH**
**Rudolf-Wild-Strasse 4**
**D-6904 Heidelberg-Eppelheim(DE)**

(72) Erfinder: **Wild, Rainer Dr.**
**Steigerweg 57b**
**6900 Heidelberg(DE)**

(74) Vertreter: **Patentanwälte Grünecker,**
**Kinkeldey, Stockmair & Partner**
**Maximilianstrasse 58**
**D-8000 München 22(DE)**

(54) **Standbeutel.**

(57) Die Erfindung betrifft einen Standbeutel aus einer heißsiegelfähigen oder -schweißbaren Kunststoff-Folie zur Aufnahme von flüssigen und/oder pastösen Medien.

Um einen derartigen Standbeutel so auszubilden, daß er auch bei teilweise entnommenem Inhalt eine genügende Standfestigkeit besitzt, daß er einfach zu handhaben und zu transportieren ist und der einfach hergestellt und platzsparend im ungefüllten Zustand gelagert werden kann, sieht die Erfindung vor, daß der Standbeutel mit einer Entnahmeöffnung (15) versehen ist, die durch eine Tülle (14) aus einer Kunststoff-Folie gebildet ist, die sich an das Deckelteil (11) ansetzt.

FIG.1

EP 0 380 111 A2

Die Erfindung betrifft einen Standbeutel aus einer heißsiegelfähigen oder -schweißbaren Kunststoff-Folie zur Aufnahme von flüssigen und/oder pastösen Medien mit einer Entnahmeöffnung, der zwei Seitenwände bildende, im wesentlichen rechteckige Flächenteile aufweist, die an ihren Längskanten miteinander versiegelt sind, wobei zwischen den unteren Querkanten ein faltbares, sich zwischen die Seitenwände einlegendes, als Standboden dienendes unteres Bodenteil und im Bereich des oberen Endes der Seitenwände ein faltbares, sich zwischen die Seitenwände einlegendes, ein Deckenteil bildendes Folienelement eingefügt sind.

Standbeutel aus Kunststoff-Folien sind insbesondere als Einweg-Verpackungen für Getränke bekannt. Üblicherweise handelt es sich hierbei um spitz zulaufende Verpackungen fit einem Abfüllvolumen von 0,2 1. Die verwendeten Folien solcher Getränkeverpackungen weisen eine dünne Aluminium-Folienschicht auf, die die Verpackung unter anderem stabilisiert. In die Unterseite ist ein Standboden eingearbeitet, so daß der Beutel auch nach seinem Öffnen auf eine Unterlage aufgestellt werden kann, ohne daß der Beutelinhalt aus der Entnahmeöffnung herausläuft oder der Beutel umkippt. Die Entnahmeöffnung kann beispielsweise bei solchen Getränkeverpackungen durch eine Soll-Durchstichöffnung vorgegeben werden, durch die ein an seinem Ende spitz zulaufender Strohhalm hindurchgestochen werden kann.

Neben Getränken werden in Folien-Beuteln flüssige oder pastöse Medien, beispielsweise flüssige Waschmittel, eingefullt. Vornehmlich werden solche Folien-Beutel als Nachfüllpackungen eingesetzt.

Um eine erhöhte Stabilität solcher Standbeutel mit einem unteren Bodenteil, das zwischen die Seitenwände eingesetzt ist, zu erreichen, wobei bevorzugt solche Standbeutel aus zwei miteinander verschweißten Wandteilen bestehen, ist ein zusätzliches Deckenteil eingearbeitet, das ähnlich dem Standboden aufgebaut ist.

Ein grundsätzlicher Vorteil der Folien-Beutel kann darin gesehen werden, daß sie im ungefüllten Zustand sehr flach zusammengefaltet werden können und so nur wenig Platz beanspruchen. Gerade Standbeutel mit einem größeren Volumen, d.h. mit einem Volumen bis zu zwei Litern, werden praktisch nicht für Füllungen verwendet, die portionsweise entnommen werden, da ein geöffneter Beutel, beispielsweise durch Abschneiden einer oberen Eckkante, nicht ausreichend gewährleistet, daß beim Eindringen von Luft in den Innenraum und nach einer teilweisen Entnahme des Inhaltes eine ausreichende Standfestigkeit verbleibt.

Aufgabe der Erfindung ist es, einen Standbeutel anzugeben, der auch bei teilweise entnommenem Inhalt eine genügende Standfestigkeit besitzt, der einfach zu handhaben und zu transportieren ist, der einfach hergestellt und platzsparend im ungefüllten Zusatz gelagert werden kann.

Gelöst wird diese Aufgabe erfindungsgemäß dadurch, daß die Entnahmeöffnung durch eine Tülle aus einer Kunststoff-Folie gebildet ist, die sich an das Deckenteil ansetzt. Durch die Verwendung einer Tülle am oberen Deckenteil des Standbeutels wird für den Anwender die Entnahmeöffnung vorgegeben; gleichzeitig bildet eine solche Nlle eine Ausgußöffnung, über die der Inhalt entleert werden kann. Eine solche Tülle kann in einfacher Veise aus einer Kunststoff-Folie hergestellt und mit dem ebenfalls aus einer Kunststoff-Folie bestehenden Deckenteil verschweißt werden. Zum Öffnen der Tülle wird das obere Ende abgeschnitten, wobei durch die Richtung des Schnittes auch gleichzeitig die Größe der Öffnung in der Tülle beeinflußt werden kann. Die Tülle bietet aber auch die Möglichkeit, sie mit Hilfe beispielsweise einer Federklammer zu verschließen; zur Erhöhung der Dichtigkeit kann die Tülle mehrfach an der Klammerstelle zusammengefaltet werden.

In einer vorteilhaften Ausbildung des Standbeutels besitzt das Deckenteil eine mittlere Faltnaht, die sich zwischen den beiden Siegelnahten der Seitenwände erstreckt. Entlang dieser Faltnaht wird die Tülle, bevorzugt in der Mitte der Faltnaht, angesetzt, so daß sich die Tülle exakt zwischen der vorderen und der hinteren Seitenwand befindet. Das Deckenteil sollte hierbei symmetrisch zu der Faltnaht verlaufen. Durch eine solche Anordnung der Tülle wird infolge der Symmetrie ein sehr stabiler Aufbau erreicht.

Um die zur Ausbildung der Tülle erforderlichen Siegelnähte einerseits im Hinblick auf einen platzsparenden Aufbau im zusammengefalteten Zustand und andererseits im Hinblick auf eine gleichmäßige Zugverteilung in einer Ebene bzw. einer Linie auszurichten, werden das Deckenteil und die Tülle aus zwei Folien erstellt, wobei jede Folie eine Seitenfläche des Deckenteiles und eine Seitenfläche der Tülle bildet. Die Zuschnitte dieser Folien werden dann entlang der Kanten, die die Faltnaht bildet und entlang der seitlichen Kanten der Tülle miteinander versiegelt. Die obere Kante, die bevorzugt die Entnahmeöffnung der Tülle bildet, kann ebenfalls versiegelt werden; sie kann aber auch vorteilhaft dadurch erhalten werden, daß die beiden Folienteile an dieser Entnahmekante miteinander verbunden sind, d.h. daß die beiden Seitenteile aus einer einzigen Folie gebildet entlang dieser Entnahmekante gefaltet sind. Eine solche Entnahmekante hat zusatzlich den Vorteil, daß beim Öffnen des Standbeutels nur ein schmaler Streifen dieser Kante entfernt, dh. abgeschnitten werden muß.

Zur Serienherstellung des Standbeutels kann die Tülle als gesondertes Folienteil gefertigt und in das Deckenteil eingesiegelt werden. Auf diese Veise können für einen in seinen Zuschnitten vorgefertigten Standbeutel, je nach Erfordernis, verschiedene Tüllen eingesetzt werden. Solche allen können entsprechend dem Inhalt des Standbeutels sehr schmal und lang oder aber sehr kurz und breit, etwa in Form eines Trapezes, verlaufen.

Insbesondere dann, wenn die die Entnahmeöffnung bildende Kante der Tülle eine Siegelnaht aufweist, ist eine markierte Trennlinie von Vorteil, so daß der Anwender zum Öffnen des standbeutels die Tülle entlang dieser Trennlinie kappen kann. Die Tülle sollte in einer Länge ausgeführt werden derart, daß sie über die oberen Enden der Seitenwande vorstehen, so daß die Tülle gut zugänglich und eine Entnahme des Inhaltes des Standbeutels problemlos möglich ist.

In einer bevorzugten Ausführungsform entspricht die Tülle eines gefüllten Standbeutels einem Kegelstumpf.

Zur leichten Handhabung des Standbeutels sind Grifföffnungen vorgesehen, die in über das Deckenteil hinaus verlängert vorstehende Seitenwände gebildet werden. Diese Grifföffnungen, beispielsweise in einer leicht herzustellenden Ausführung in Form von gestanzten Schlitzen, sind oberhalb des Deckenteiles leicht zugänglich. Die Tülle sollte auch hier eine über die oberen Kanten der verlängerten Seitenwände hinausreichende Länge aufweisen. Zur einfachen Herstellung der beiden Grifföffnungen werden diese in den beiden Seitenwände bei zusammengefaltetem Beutel deckungsgleich gestanzt, so daß sie bei gefülltem Beutel direkt gegenüberliegen. Zur gleichmäßigen Verteilung der Zugkräfte im Bereich der Grifföffnugen auf die Seitenwände verlaufen diese etwa parallel zu der Decken-Siegelnaht zwischen den Seitenflächen und dem Deckenteil.

Der Standbeutel einschließlich der Tülle wird aus vorgefertigten, heißsiegelfähigen Flächenteilen gefertigt, bevorzugt aus einer zweischichten Verbund-Folie. Ausgezeichnete Eigenschaften werden durch eine zum Innenraum gerichtete Folie aus Polyethylen und einer die Außenhaut bildenden Polyester-Folie erreicht. Die Verwendung einer Polyethylen-Folie in Form einem Coextrusions-Folie - hierbei handelt es sich um eine mehrschichtige Folie - bietet den Vorteil, daß die Folie, die die Innenwand des Standbeutels bildet, entsprechend der Verwendung des Standbeutels und den gegebenen Anforderungen angepaßt werden kann. So kann beispielsweise die zu siegelnde Seite der Folie besonders siegelfreundlich ausgestaltet werden; ferner läßt sich mit einer solchen Coextrusions-Folie unter Änderung der Zusammensetzung eine höhere Steifigkeit erzielen. Die Dicke der nach außen gerichteten Polyester-Folie beträgt

mindestens 10 $\mu$m bevorzugt 12 $\mu$m, während die nach innen gerichtete Polyethlen-Folie oder Coextrusions-Folie eine Dicke von 80 bis 200 $\mu$m bevorzugt eine Dicke von 100 $\mu$m bis 150 $\mu$m, haben sollte. Um in den Standbeutel auch lösungsmittelhaltige oder migrationsempfinliche Produkte einfüllen zu können, wird zwischen die einzelnen Folienschichten, bevorzugt im Anschluß an die nach innen gerichtete Folie, eine als Sperr- schicht wirkende dünne Aluminiumfolie eingefügt, die je nach Größe des Stand- beutels eine Dicke zwischen 8 $\mu$m und 15 $\mu$m haben sollte. Eine solche Aluminiumschicht verhindert beispielsweise den Austritt von Lösungsmittel durch die Wände des Beutels oder hinsichtlich migrationsempfindlichen Produkten das Eindringen von Sauerstoff in den Beutel und damit in das Produkt.

Damit eine möglichst große Standfestigkeit des Beutels erhalten wird, ist es vorteilhaft, daß der Beutel im gefüllten Zustand eine nahezu zylinderförmige Form annimmt. Um dies zu erreichen, werden die beiden Seitenwände rechteckig ausgeführt und an den Längsseiten miteinander versiegelt. Das Bodenteil und das Deckenteil haben hierbei einen annähernd kreisförmigen Zuschnitt; Bodenteil und Deckenteil sind an den Seitenwänden am zusammengefalteten Beutel entlang einer halbkreisförmigen Siegelnaht angesiegelt. Abweichend von einer solchen rechteckigen Form der Seitenwände bzw. der zylindrischen Form des gefüllten Standbeutels können die Seitenwande zum oberen Deckenteil hin geringfügig konisch zulaufen, so daß der gefüllte Standbeutel einen Kegelstumpf bildet. Um die Tülle gut erreichen zu können, sollte diese nach Möglichkeit am höchsten Punkt des stehenden, gefüllten Beutels liegen.

Ein Ausführungsbeispiel der Erfindung wird nachfolgend anhand der Zeichnung näher erläutert. In der Zeichnung zeigt

Figur 1 einen gefüllten Standbeutel in einer perspektivischen Ansicht,

Figur 2 einen dem Standbeutel nach Figur 1 ähnlichen Beutel in entleerter, zusammengefalteter Form,

Figur 3 einen Längsschnitt durch den Standbeutel nach Figur 1 entlang einer Schnittlinie, wie sie in Figur 2 durch die Schnittlinie III'-III' angegeben ist,

Figur 4 den Folien-Zuschnitt einer die Entnahmeöffnung bildenden Tülle und

Figur 5 einen Schnitt durch die Kunststoff-Folie, aus der der Standbeutel gefertigt ist.

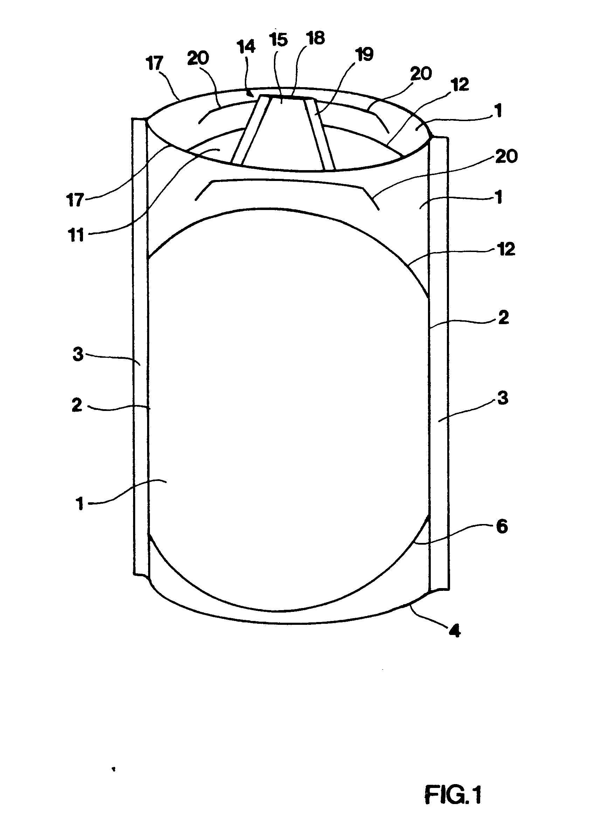

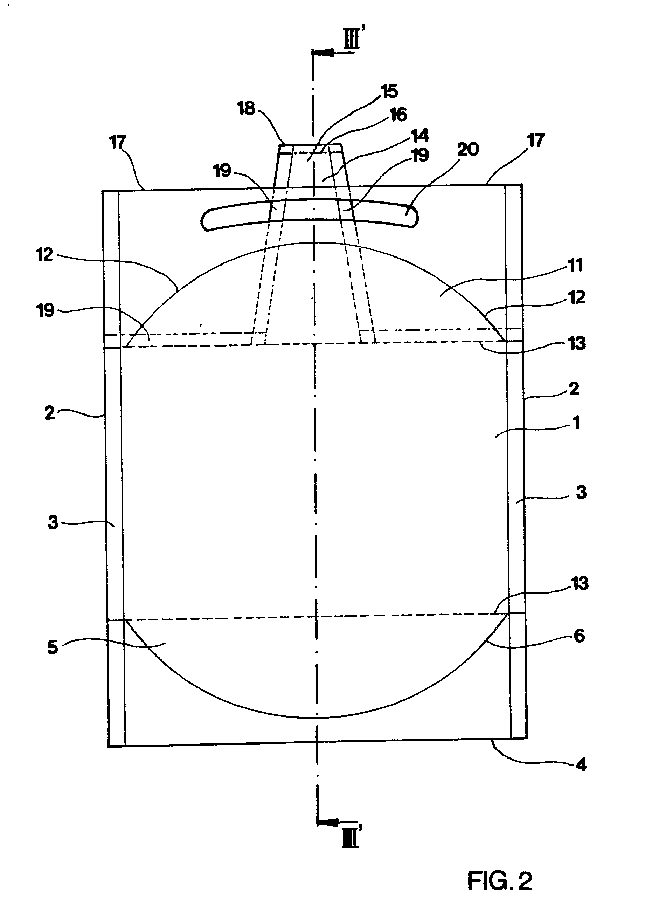

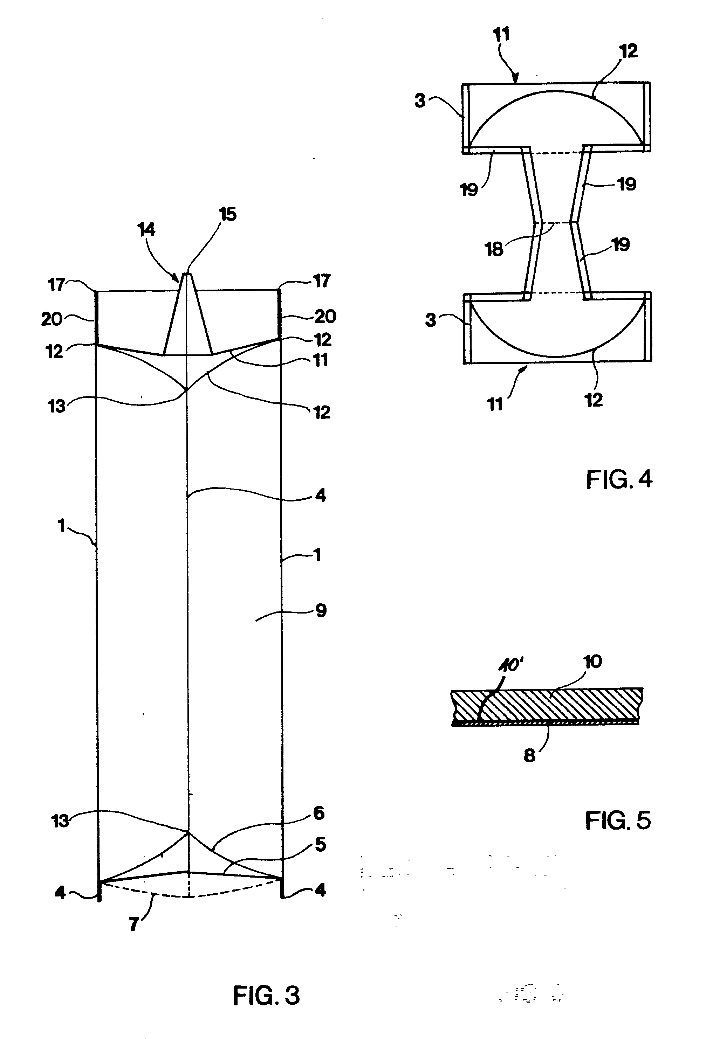

Wie insbesondere die Figuren 1 und 3 zeigen, weist der Standbeutel zwei Seitenwände 1 auf, die an ihren senkrecht verlaufenden Längskanten 2 heiß versiegelt sind, so daß jeweils eine Siegel- oder Schweißnaht 3 entsteht. Entlang der unteren Querkanten 4 ist ein als Standboden dienendes unteres Bodenteil 5 eingesetzt, das im Zuschnitt kreis- oder ellipsenförmig ist, wie gut in Figur 2 an der Boden-Siegelnaht 6 zu erkennen ist. Das Bodenteil 5 und die Seitenwände 1 sind über den gesamten Bereich zwischen der -unteren Querkante 4 und der Boden-Siegelnaht 6 flächig verschweißt oder versiegelt, so daß durch diese doppelte Kunststoff-Folie in diesem unteren Bereich eine verstärkte Beutelwand erhalten wird.

Im gefüllten Zustand hängt das untere Bodenteil 5, zumindest in seinem mittleren Bereich, nach unten durch, wie in Figur 3 durch die unterbrochene Linie 7 angedeutet ist. Durch das nach unten durchhängende Bodenteil 5 sowie die unteren, verstärkten Querkanten 4 wird eine ausgezeichnete Standfestigkeit des Standbeutels erzielt.

Alle Zuschnitte, aus denen der Standbeutel gebildet ist, bestehen aus einer zweischichtigen Kunststoff-Folie, wie sie in Figur 5 im Schnitt gezeigt ist. Die nach außen gerichtete Folie 8, die die Außenhaut bildet, ist eine Polyester-Folie mit einer Dicke von 12 µm, während es sich bei der nach innen zum Innenraum 9 des Standbeutels zeigenden, die Innenhaut bildenden Folie 10 um eine als Coextrusions-Folie gefertigte Polyethylen-Folie handelt. Eine solche Coextrusions-Folie ist in mehreren Schichten aufgebaut und kann, entsprechend den Anforderungen, in ihrem Schichtaufbau bei der Extrusion variiert und den spezifischen Anforderungen entsprechend eingestellt werden. Die Folie 10 besitzt eine Dicke von 150 µm, wobei die angegebenen Foliendicken für einen Standbeutel mit einem Füllinhalt von etwa 1 bis 1,5 Liter, maximal von 2 Litern, gelten. Zwischen der die Außenhaut bildenden Folie 8 und der die Innenhaut bildenden Folie 10 ist eine als Sperrschicht wirkende dünn Aluminiumfolie 10' eingefügt, die je nach Größe des Standbeutels eine Dicke zwischen 8 µm und 15 µm besitzt. Eine solche Aluminiumschicht verhindert beispielsweise den Austritt von Lösungsmittel durch die Wände des Beutels oder hinsichtlich migrationsempfindlichen Produkten das Eindringen von Sauerstoff in den Beutel und damit in das Produkt.

Der Standbeutel mit annähernd zylinderförmiger Außenkontur besitzt im oberen Bereich der Seitenwände 1 ein eingesiegeltes Deckenteil 11, das im Zuschnitt dem Bodenteil 5 entspricht. Im Gegensatz zum Bodenteil 5 beschreibt die dem Deckenteil 11 zugeordnete Decken-Siegelnaht 12 eine Kreisbahn mit nach unten gerichteter Öffnung, d.h. sie verläuft entgegengesetzt zu der Siegelnaht 6 des Bodenteiles 5. Sowohl das Bodenteil 5 als auch das Deckenteil 11 besitzen eine Faltnaht 13, die in Figur 2 angedeutet sind und die sich zwischen den Siegelnähten 3 der Seitenwande 1 erstrecken.

Entlang der oberen Faltnaht 13 ist eine Tülle 14 angesetzt, die an ihrem Ende eine Entnahmeöffnung 15 bildet. Diese Tülle 14 läuft im Zuschnitt, wie Figur 2 zeigt, zu ihrem Ende hin konisch zu, so daß nach dem Öffnen dieser Tülle entlang einer als Markierung dienenden Trennlinie 16 ein kleiner Öffnungsquerschnitt frei wird. Die Tülle 14 besitzt eine Länge derart, daß sie über die oberen Querkanten 17 der Seitenwande 1 vorsteht und somit gut zugänglich ist. Die Tülle 14 ist zusammen mit dem oberen Deckenteil 11, das entlang, der Trennlinie 16 in zwei Hälften unterteilt ist, aus einem Zuschnitt zusammengesetzt, wie die Figur 4 verdeutlicht. Das obere Deckenteil 11 besteht hierbei aus zwei rechteckigen Flächenteilen, deren Breite der Breite der Seitenwände 1 entspricht. An die eine Längskante dieser rechteckigen Folienteile sind trapezförmige Flächen mittig ausgerichtet angesetzt, die mit ihrem schmalen Ende spiegelbildlich aneinanderstoßen; die Faltlinie 18 bildet die Kante 18 am Ende der Tülle des zusammengefügten Standbeutels nach Figur 2. Mit einem solchen Zuschnitt ist keine Siegelnaht am Ende der Tülle 14, das die Entnahmeöffnung 15 bildet, erforderlich. Die Bereiche der Siegelnähte der Tülle 14 und des Deckenteiles 11 sind durch die Randbereiche 19 angedeutet.

Die Seitenwande 1 sind über das Deckenteil 11 hinaus nach oben verlängert, so daß ein ausreichender Abschnitt der Seitenwände verbleibt, um Grifföffnungen 20 einzustanzen. Die Grifföffnungen 20 in den beiden Seitenwänden 1 liegen bei dem zusammengefalteten Standbeutel, wie ihn die Figur 2 zeigt, deckungsgleich übereinander, so daß sie in einem Stanzvorgang ausgeführt werden können. Während die Grifföffnungen 20 in dem Standbeutel, wie ihn die Figur 2 zeigt, die die Form von horizontal verlaufenden Langlöchern haben, sind die Grifföffnungen 20 des Standbeutels nach Figur 1 nur als Schlitze vorhanden, wobei die durch die Schlitze begrenzten Flächen beim Tragen des Standbeutels zur Seite geschoben werden. Die Grifföffnungen 20 sind in ihrer Krümmung dem Verlauf der Decken-Siegelnaht 12 angenähert. Auch die oberen zwischen der Decken-Siegelnaht 12 und der oberen Querkante 17 befindlichen Folienteile können doppelt ausgeführt sein, wobei die Flächenteile durch die Seitenwande 1 und nach oben geklappte Abschnitte, die sich an die Seiten des Deckenteiles 11 Im Zuschnitt anschließen, erhalten werden, so daß auch diese Bereiche, in denen sich die Grifföffnungen 20 befinden, verstärkt sind.

## Ansprüche

1. Standbeutel aus einer heißsiegelfähigen oder -schweißbaren Kunststoff-Folie zur Aufnahme von flüssigen und/oder pastösen Medien mit einer Entnahmeöffnung, der zwei Seitenwände bildende, im wesentlichen rechteckige Flächenteile aufweist, die an ihren Längskanten miteinander versiegelt sind, wobei zwischen den unteren Querkanten ein faltbares, sich zwischen die Seitenwände einlegendes als Standboden dienendes unteres Bodenteil und im Bereich des oberen Endes der Seitenwände ein faltbares, sich zwischen die Seitenwände einlegendes, ein Deckenteil bildendes Folienelement eingefügt sind, dadurch gekennzeichnet, daß die Entnahmeöffnung (15) durch eine Tülle (14) aus einer Kunststoff-Folie gebildet ist, die sich an das Deckenteil (11) ansetzt.

2. Standbeutel nach Anspruch 1, dadurch gekennzeichnet, daß das Deckenteil (11) eine mittlere Faltnaht (13) aufweist, die sich zwischen den beiden Siegelnähten (3) der Seitenwände (1) erstreckt, wobei entlang dieser Faltnaht (13) die Tülle (14) angesetzt ist.

3. Standbeutel nach Anspruch 2, dadurch gekennzeichnet, daß das Deckenteil (11) und die Tülle (14) aus zwei Folien gebildet sind, wobei jede Folie eine Seitenfläche des Deckenteiles (11) und eine Seitenfläche der Tülle (14) bildet und die Folien entlang der Faltnaht (13) und entlang den Kanten der Tülle (14) miteinander versiegelt sind.

4. Standbeutel nach Anspruch 3, dadurch gekennzeichnet, daß die die Tülle (14) bildenden Folienteile an der die Entnahmeöffnung (15) bildenden Kante (18) miteinander einstückig verbunden sind.

5. standbeutel nach Anspruch 2, dadurch gekennzeichnet, daß die Tülle (14) als gesondertes Folienteil gebildet und in das Deckenteil (11) eingesiegelt ist.

6. Standbeutel nach Anspruch 5, durch gekennzeichnet, daß das die Tülle (14) bildende Folienteil aus zwei gleichen Teilen besteht, die im Bereich der die Entnahmeöffnung (15) bildenden Kante (18) eine Verbindung aufweisen.

7. Standbeutel nach einem der Ansprüche 1 bis 6, dadurch gekennzeichnet, daß an der die Entnahmeöffnung (15) bildenden Kante der Tülle (14) eine Trennlinie (16) markiert ist.

8. Standbeutel nach einem der Ansprüche 1 bis 7, dadurch gekennzeichnet, daß die Tülle (14) eine Länge aufweist derart, daß sie über die oberen Querkanten (17) der Seitenwände (1) vorsteht.

9. Standbeutel nach einem der Ansprüche 1 bis 8, dadurch gekennzeichnet, daß die Tülle (14) einen Kegelstumpf bildet.

10. Standbeutel nach einem der Ansprüche 1 bis 9, dadurch gekennzeichnet, daß die Seitenwände (1) über das Deckenteil (11) hinaus verlängert sind, wobei in diesem verlängerten Bereich Grifföffnungen (20) ausgebildet sind.

11. Standbeutel nach Anspruch 10, dadurch gekennzeichnet, daß die Grifföffnungen (20) durch gestanzte Schlitze gebildet sind.

12. Standbeutel nach Anspruch 10 oder 11, dadurch gekennzeichnet, daß die Grifföffnungen (20) in den Seitenwanden (1) deckungsgleich ausgeführt sind.

13. Standbeutel nach einem der Ansprüche 10 bis 12, dadurch gekennzeichnet, daß die Grifföffnungen (20) etwa parallel zu der verbindungslinie (12) zwischen den Seitenwänden und dem Deckenteil verlaufen.

14. Standbeutel nach einem der Ansprüche 1 bis 13, dadurch gekennzeichnet, daß die Kunststoff-Folie eine zweischichtige Verbund-Folie (8, 10) ist.

15. Standbeutel nach Ansprüche 14, dadurch gekennzeichnet, daß die zum Innenraum (9) gerichtete Folie (10) eine Polyethylen-Folie ist.

16. Standbeutel nach Anpruch 14 oder 15 dadurch gekennzeichnet, daß die nach außen gerichtete, die Außenhaut bildende Folie (8) eine Polyester-Folie ist.

17. Standbeutel nach Anspruch 15, dadurch gekennzeichnet, daß die Polyethylen-Folie eine Coextrusions-Folie ist.

18. Standbeutel nach einem der Ansprüche 11 bis 17, dadurch gekennzeichnet, daß die nach außen gerichtete Folie (8) eine Dicke von mindestens 10 $\mu$m aufweist.

19. Standbeutel nach Anspruch 18, dadurch gekennzeichnet daß die Dicke der nach außen gerichteten Folie (8) 12 $\mu$m beträgt.

20. Standbeutel nach einem der Ansprüche 14 bis 19, dadurch gekennzeichnet, daß die nach innen gerichtete Folie (10) eine Dicke von 80 $\mu$m bis 200 $\mu$m aufweist.

21. Standbeutel nach Anspruch 20, dadurch gekennzeichnet, daß die Dicke der nach innen gerichteten Folie (10) 100 $\mu$m bis 150 $\mu$m beträgt.

22. Standbeutel nach einem der Ansprüche 1 bis 21, dadurch gekennzeichnet, daß das Bodenteil (5), und das Deckenteil (11) einen annähernd kreisförmigen Zuschnitt aufweisen und derart mit den Seitenwanden (1) verbunden sind, daß der gefüllte Beutel einen Zylinder bildet.

23. Standbeutel nach einem der Ansprüche 14 bis 22, dadurch gekennzeichnet, daß zwischen den Schichten der Verbund-Folie (9, 10) eine Aluminiumfolie (10') angeordnet ist.

24. Standbeutel nach Anspruch 23, dadurch gekennzeichnet, daß die Aluminiumfolie (10') eine Dicke zwischen 8 $\mu$m und 15 $\mu$m aufweist.

FIG.1

FIG.2

FIG. 4

FIG. 5

FIG. 3